Europäisches Patentamt

European Patent Office

Office européen des brevets

(19)

(11) Publication number: **0 148 918**
**B1**

(12) **EUROPEAN PATENT SPECIFICATION**

(45) Date of publication of patent specification: **14.10.87**

(21) Application number: **84902718.0**

(22) Date of filing: **09.07.84**

(86) International application number:
**PCT/GB84/00244**

(87) International publication number:
**WO 85/00492 31.01.85 Gazette 85/03**

(51) Int. Cl.⁴: **H 04 N 11/00**

(54) EXTENDED DEFINITION TELEVISION SYSTEM.

(30) Priority: **08.07.83 GB 8318602**

(43) Date of publication of application:
**24.07.85 Bulletin 85/30**

(45) Publication of the grant of the patent:
**14.10.87 Bulletin 87/42**

(84) Designated Contracting States:
**AT BE CH DE FR GB LI LU NL SE**

(56) References cited:
**WO-A-84/02442**

**IEEE Transactions on Consumer Electronics vol.CE-28, no.4, November 1982, New York, (US); RHODES: "Time division multiplex of time compressed chrominance for a compatible high definition television system", pages 592-602**

**Documents CCIR Study Groups, Period 1982-1986, Document 10-11S/106-E; 23 September 1983; "10-11S-2" Draft New Report; "Satellite transmission of multiplexed analogue component (MAC) television signals", pages 1-19**

(73) Proprietor: **INDEPENDENT BROADCASTING AUTHORITY**
**70 Brompton Road**
**London SW3 1EY (GB)**

(72) Inventor: **DRURY, Gordon, Martin**
**31 Kingsley Park**
**Whitchurch Hampshire (GB)**
Inventor: **WINDRAM, Michael, David**
**37 Winslade Road Harestock Winchester Hampshire S022 6LN (GB)**

(74) Representative: **Crawford, Andrew Birkby et al A.A. THORNTON & CO. Northumberland House 303-306 High Holborn London WC1V 7LE (GB)**

Courier Press, Leamington Spa, England.

## Description

The present invention relates to an improvement in the Multiplexed Analogue Component (MAC) type of television signal in which chrominance and luminance components are time compressed and are placed sequentially so as to occupy together with the necessary data, sync and clamping signals, a period substantially equal to the conventional line period e.g. approximately 64 µS.

The presently proposed type of MAC signal provides an aspect ratio of approximately 4:3 and provides superior pictures to those available with either existing PAL or SECAM. It is also capable of modification to provide even better pictures.

It is an object of the present invention to add additional information to the MAC signal so as to enable extended definition pictures to be reproduced by a suitable receiver without interfering with the picture reproduced by a standard MAC receiver.

The present invention proposes to make use of the time allocated to the data burst equivalent to two sound channels for additional video information without affecting the positions in the line interval of the basic chrominance and luminance information for the standard 4:3 aspect ratio picture.

The additional video information can represent additional lines of a television signal or can represent additional information for the existing lines of the signal to alter the aspect ratio.

Features and advantages of the present invention will become apparent from the following description of an embodiment thereof given by way of example with reference to the accompanying drawings, in which:—

Figure 1 shows a representation of a frame of a standard MAC signal;

Figure 2 shows a representation of a frame of a MAC signal according to the present invention;

Figure 3 shows waveforms of the standard MAC signal and the two waveforms necessary for the present invention; and

Figure 4 shows in block diagram terms a transmission/reception system for the MAC signal shown in Figure 2.

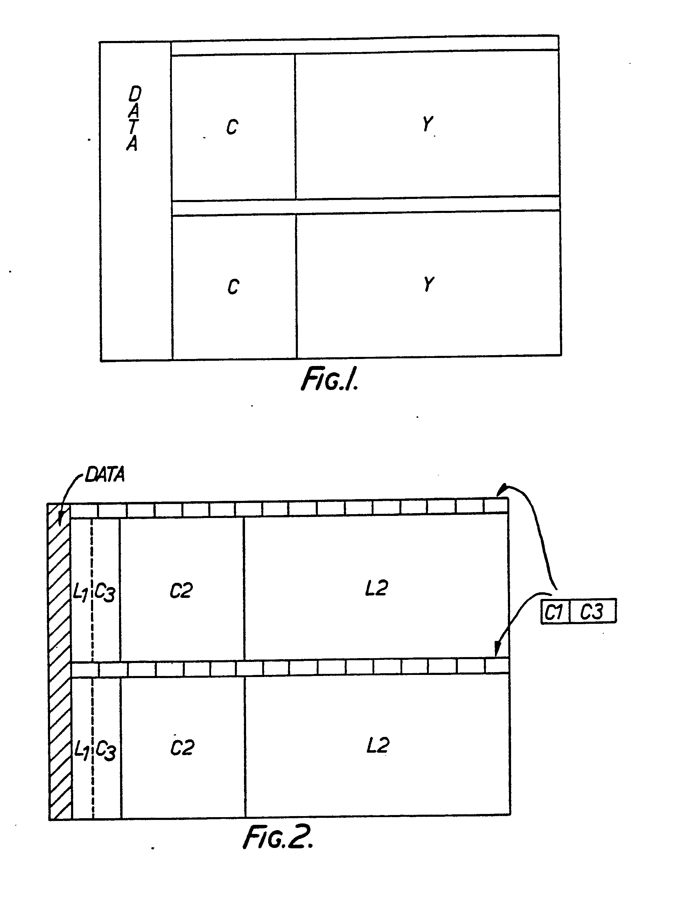

The C-MAC specification conveys a vision signal on 576 lines of a frame, occupying 1296−203=1093 samples of each line. This is illustrated in Figure 1.

The 203 data samples at the start of each line can convey synchronisation and 8 companded sound channels. For extended definition, we propose to use the time equivalent to two sound channels. In the conventional multiplex, the 8 sound channels are conveyed in 162 packets per frame, made up of 20 packets/frame/sound channel + 2 packets/frame for BI and PI information. In reducing the 2 sound channels, BI and PI will remain essential, but maybe at a lower rate. Two sound channels, therefore require either 41 or, at the most 42 packets per frame. These packets are distributed over 624 lines so that we get the results:—

$$\begin{cases} 41 \text{ packets: 58 bit burst including 8 bit sync, } +409 \text{ spare bits} \\ 42 \text{ packets: 59 bit burst including 8 bit sync, } +282 \text{ spare bits} \end{cases}$$

In order to avoid unnecessary limitations on the data channel, this proposal will assume a need for a 59 bit burst, although this is a matter of detail at this stage.

We therefore have a 4:3 aspect ratio picture conveyed in 1093 samples on 576 lines. In principle, we can have 1296−59=1237 samples on 624 lines, so that with the same information packing density, as aspect ratio of

$$4 \times \frac{624}{576} \times \frac{1237}{1093} :3 \text{ i.e. 4.9:3 is theoretically possible.}$$

This does make assumptions however on transition times but it is clear that a 5:3 aspect ratio can be approached.

Our proposal is illustrated in Figure 2. The main features are:—

(i) The position of the 4:3 aspect ratio chrominance and luminance is not moved. This is particularly important when scrambling using rotation methods is considered.

(ii) The 5:3 aspect ratio luminance edges are sent on the same lines as the rest of the 4:3 ratio luminance and chrominance information. The boundary between L1 and L3 (left and right) is defined for each field to permit the 4:3 ratio picture to be the correct part of the 5:3 ratio picture.

(iii) The 5:3 aspect ratio chrominance edges are sent on a number e.g. 18 of inactive lines of each field interval. Each of these lines contains 16 blocks of C1 and C3, each block appropriate to one line of the field. The boundary between C1 and C3 (left and right) is defined as for the luminance signal.

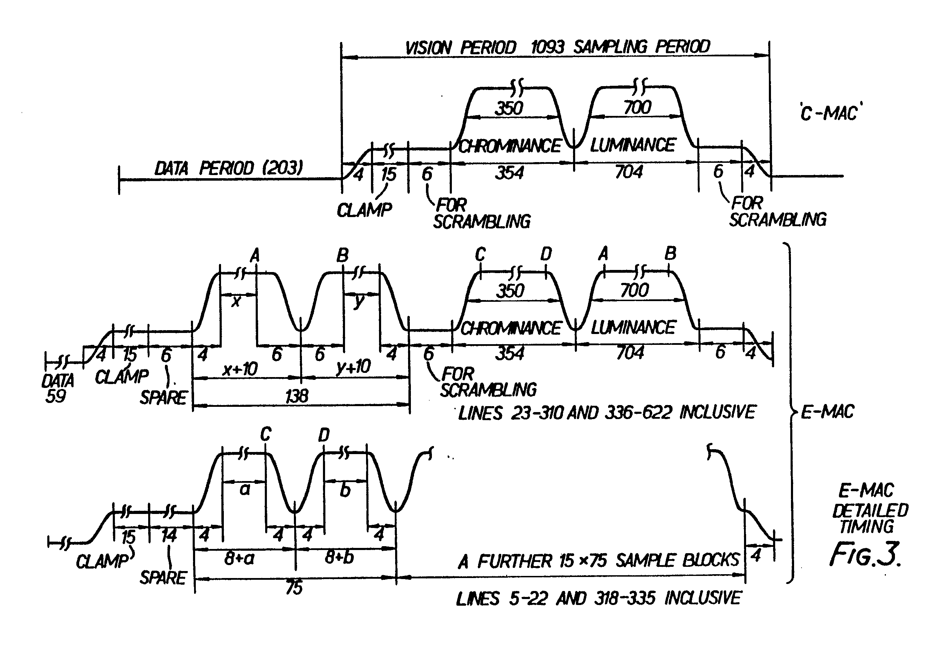

Figure 3 gives details of one proposed set of numbers and waveforms. In the diagrams,

$$\begin{cases} x+y=118 \\ a+b= 59 \end{cases}$$

2

so that for extended pictures, the line lengths between $\frac{1}{2}$ voltage points are 818 for luminance and 409 for chrominance, with conventional line lengths of 700 for luminance and 350 for chrominance. This corresponds for the extended pictures to a 4.66:3 aspect ratio and for conventional pictures to 3.99:3 aspect ratio.

It is thought that a video tape recorder is initially going to be the most likely source of signals because it appears from first studies that it ought to be possible to modify B or C format machines to cope with the extended format proposed above, in which case the analogue machine will handle 5:3 ratio signals not possible on a 4:3 aspect ratio digital machine.

In defining the transmission channel for extended definition, we could remain with 20.25 MHz sampling in the coder and limit luminance bandwidth to 6 MHz and Chrominance to 3 MHz. Alternatively, we could raise the sampling frequency to say 27 MHz in the coder to permit 7.5 MHz luminance bandwidth and 3.8 MHz chrominance bandwidth if the RF channel can support 11 MHz baseband bandwidth without penalty to the ordinary viewer.

In considering displays, it is considered that the type of signal we propose is of use with several different types—conventional 4:3 ratio/625 line/50 Hz/2:1 interlace small screen up to large screen 5:3 ratio/1250 lines/50 Hz (or even 100 Hz)/2:1 interlace.

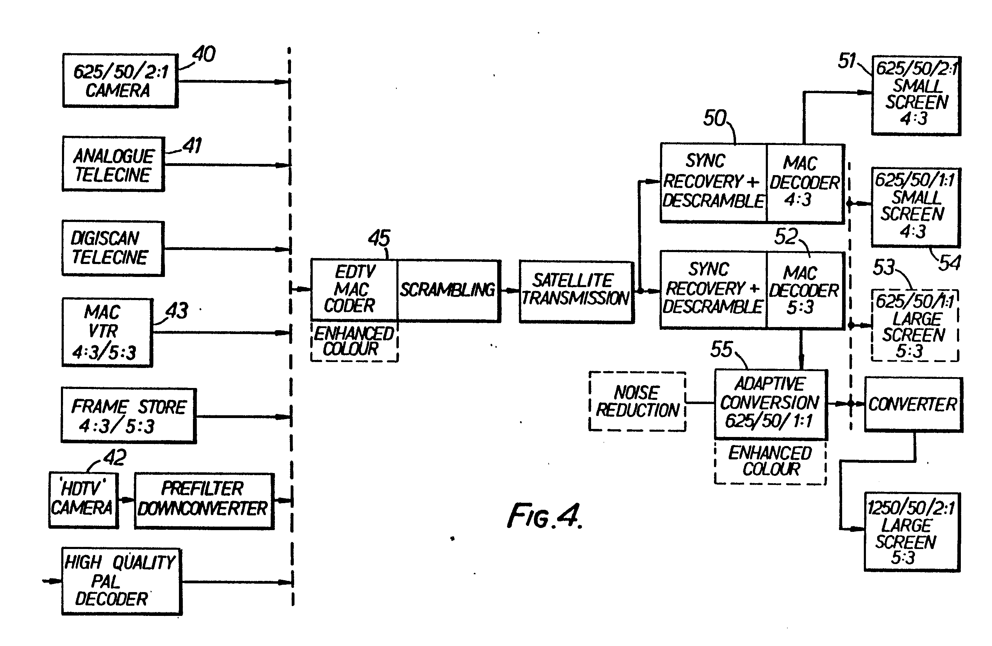

Figure 4 indicates how various blocks of activity could be combined in an overall transmission/ reception system.

The source of television signals to be transmitted can be either a conventional source such as a conventional camera 40, telecine 41 or it can be a source of high definition signals such as a High Definition Television Camera 42 or a tape recorder 42. If the source is conventional one, the transmission and reception are conventional for MAC signals. If, however, the source is a high definition one, then special encoding is required in order to include those component signals which are additional to the usual component signals in MAC. A coder 45 includes storage for all the component signals with the usual MAC signals being read out from the storage at the usual times and in the usual manner. The extra component signals are read out at times other than the usual MAC timings such that the chrominance signals for successive lines are read out in series during the field blanking interval and are added to signal for transmission in previously blank portions of lines in the field blanking interval.

Similarly, extra luminance signals are added to the signal for transmission either by being included in the field blanking interval but preferably by being added in the time previously occupied by two sound channels.

The timing of the reading out of the extra component signals is derived from the usual MAC clocks and the presence of the extra information can be signalled to a receiver by inclusion of signals in the data information accompanying the video information.

On reception, syncs are recovered and the receiver clocks are generated. If the receiver is a standard MAC receiver, it is incapable of recognising the signal indicative of the extra information and so simply recovers the usual MAC information signals using standard recovery and decoding circuitry 50 for display on a standard screen 51.

If, however, the receiver is capable of displaying the extra information, after sync recovery and clock regeneration, all the chrominance and luminance samples are fed to a decoder 52 which includes additional storage for the extra samples as well as additional clock circuits. Reading out of the stored samples enables assembly of the enhanced definition signals for display e.g. on a 5:3 aspect ratio screen 53 or a conventional 4:3 aspect ratio screen 54. The selection is made by the viewer and by an adaptive conversion circuit 55 which enables either standard MAC or enhanced MAC signals to be selectively displayed.

The above description is given on the basis that a different aspect ratio picture is required as the extended definition picture. It is possible, however, for the additional signals to enable a conventional aspect ratio picture to be provided but with an increased number of lines or for both an increased number of lines and a different aspect ratio to be provided in combination. It is thus possible that luminance information be included as well as chrominance information in the lines in the field blanking interval. Likewise, chrominance information may be included with luminance information on the active lines.

**Claims**

1. A method of transmitting a Multiplexed Analogue Component (M.A.C.) television signal, comprising producing first chrominance component and luminance component signals representing lines of a television signal capable of reconstruction in a conventional M.A.C. television receiver to produce a first television picture having a first aspect ratio and a first number of lines, the component signals for each line being time compressed and placed sequentially at times appropriate to allow reconstruction of the television picture but occupying less than the whole line time, characterised in that further luminance component and chrominance component signals are generated and added to portions of the television signal not containing said first signals, the further component signals being capable of reproduction together with the first signals to produce an extended definition picture having an aspect ratio different from that of said first picture and/or having a greater number of lines than said first picture, the further

3

component signals not interfering with the reproduction from said first component signals of a television picture having the first aspect ratio and first number of lines.

2. A method according to claim 1, wherein the further luminance signals are added to the line signals containing the first-mentioned chrominance and luminance signals prior to the first-mentioned signals.

3. A method according to claim 1 or 2, wherein the television signal comprises a number of line signals which do not contain first-mentioned signals, and wherein the further chrominance signals are added to one or more of said lines which do not contain said first-mentioned signals.

4. A method of receiving and reproducing television signals transmitted according to claim 1, comprising recovering the first-mentioned and further component signals from the transmitted line signals, temporarily storing all the component signals, and then selectively reading out stored signals at times depending on whether extended definition pictures or standard pictures are required.

## Patentansprüche

1. Verfahren zur Aussendung eines Fernsehsignals mit multiplexierter Analogkomponente (MAC) durch Erzeugen erster Chrominanzkomponenten- und Luminanzkomponentensignale, die Zeilen eines Fernsehsignals darstellen, das in einem konventionellen MAC-Fernsehempfänger rekonstruierbar ist, um ein erstes Fernsehbild zu erzeugen, das ein erstes Bildseitenverhältnis und eine erste Anzahl von Zeilen hat, wobei die Komponentensignale für jede Zeile zeitkomprimiert werden und sequentiell in Zeiten angeordnet werden, die geeignet sind, um die Rekonstruktion des Fernsehbildes zu ermöglichen, ohne jedoch dabei weniger als die halbe Zeilenzeit zu besetzen, dadurch gekennzeichnet, daß weitere Luminanzkomponenten- und Chrominanzkomponentensignale erzeugt und zu Teilen des Fernsehsignals hinzugefügt werden, die nicht die ersten Signale enthalten, wobei die weiteren Komponentensignale in der Lage sind, zusammen mit den ersten Signalen reproduziert zu werden, um ein Bild mit vergrößerter Auflösung zu erzeugen, das ein Bildseitenverhältnis aufweist, das sich von dem des ersten Bildes unterscheidet und/oder das eine größere Anzahl von Zeilen als das erste Bild hat, wobei die weiteren Komponentensignale mit der Reproduktion aus den ersten Komponentensignalen eines Fernsehbildes, das das erste Bildseitenverhältnis und due erste Zeilenanzahl hat, nicht interferieren.

2. Verfahren nach Anspruch 1, bei dem die weiteren Luminanzsignale den Zeilensignalen, die die ersterwähnten Chrominanz- und Luminanzsignale enthalten, vor den ersterwähnten Signalen hinzuaddiert werden.

3. Verfahren nach Anspruch 1 oder 2, bei dem das Fernsehsignal eine Anzahl von Zeilensignalen enthält, die nicht erstgenannte Signale enthalten, und wobei die weiteren Chrominanzsignale zu einer oder mehreren Zeilen hinzuaddiert werden, die nicht die erstgenannten Signale enthalten.

4. Verfahren zum Empfangen und Wiedergeben von Fernsehsignalen, die entsprechend Anspruch 1 ausgesendet worden sind, enthaltend die Wiedergewinnung der ersterwähnten und weiteren Komponentensignale aus den übertragenen Zeilensignalen, vorübergehendes Speichern aller Komponentensignale und anschließendes selektives Auslesen der gespeicherten Signale zu Zeitpunkten, die davon abhängen, ob Bilder vergrößerter Auflösung oder Standardbilder gefordert werden.

## Revendications

1. Procédé de transmission d'un signal de télévision à composante Analogique Multiplexée (M.A.C.) consistant à produire des premiers signaux de composante de chrominance et de composante de luminance représentant des lignes d'un signal de télévision permettant la reconstitution dans un récepteur de télévision M.A.C. conventionnel pour produire une première image de télévision ayant un premier rapport d'aspect et un premier nombre de lignes, les signaux de composantes pour chaque ligne étant compressés dans le temps et placés séquentiellement à des instants appropriés pour permettre la reconstitution de l'image de télévision mais en occupant moins que la totalité du temps d'une ligne, caractérisé en ce que d'autres signaux de composante de luminance et de composante de chrominance sont produits et additionnés à des parties du signal de télévision ne contenant pas lesdits premiers signaux, les autres signaux de composantes permettant une reproduction avec les premiers signaux pour obtenir une image de plus grande définition ayant un rapport d'aspect différent de celui de ladite première image et/ou ayant un plus grand nombre de lignes que ladite première image, les autres signaux de composantes n'interférant pas avec la reproduction à partir desdits premiers signaux de composantes d'une image de télévision ayant le premier rapport d'aspect et le premier nombre de lignes.

2. Procédé selon la revendication 1, dans lequel les autres signaux de luminance sont additionnés aux signaux de lignes contenant les signaux de chrominance et de luminance mentionnés en premier avant les signaux mentionnes en premier.

3. Procédé selon la revendication 1 ou 2, dans lequel le signal de télévision comporte un certain nombre de signaux de lignes qui ne contiennent pas les signaux mentionnés en premier et dans lequel les autres signaux de chrominance sont ajoutés à une ou plusieurs desdites lignes qui ne contiennent pas lesdits signaux mentionnés en premier.

4. Procédé de réception et de reproduction de signaux de télévision transmis selon la revendication 1, consistant à récupérer les signaux mentionnés en premier et les autres signaux de composantes dans les signaux de lignes transmis, à mémoriser momentanément tous les signaux de composantes et à lire ensuite sélectivement des signaux mémorisés à des instants différents suivant que des images de plus grande définition ou des images standards sont voulues.

**0 148 918**

*Fig.1.*

*Fig.2.*

1

VISION PERIOD 1093 SAMPLING PERIOD

350 700

C-MAC

CHROMINANCE LUMINANCE

DATA PERIOD (203)

4 | 15 | 6 | 354 | 704 | 6 | 4

CLAMP

FOR SCRAMBLING

FOR SCRAMBLING

A B C D A B

350 700

x y

CHROMINANCE LUMINANCE

4 | 15 | 6 | 4 | 6 | 6 | 4 | 6 | 354 | 704 | 6 | 4

DATA 59 CLAMP SPARE

x+10 y+10

138

FOR SCRAMBLING

LINES 23-310 AND 336-622 INCLUSIVE

E-MAC

C D

a b

15 | 14 | 4 | 4 | 4 | 4 | 4

CLAMP SPARE

8+a 8+b

75

A FURTHER 15 ×75 SAMPLE BLOCKS 4

LINES 5-22 AND 318-335 INCLUSIVE

E-MAC DETAILED TIMING

Fig.3.

0 148 918

Fig.4.